(19) Europäisches Patentamt
European Patent Office
Office européen des brevets

(11) **EP 0 834 028 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.⁷: **F16H 61/02**
// (F16H59/54, 59:66, 61:16)

(21) Anmeldenummer: **96915999.5**

(22) Anmeldetag: **12.06.1996**

(86) Internationale Anmeldenummer:
**PCT/DE96/01028**

(87) Internationale Veröffentlichungsnummer:
**WO 97/01051 (09.01.1997 Gazette 1997/03)**

(54) **STEUERUNG FÜR EIN KRAFTFAHRZEUG-GETRIEBE**

CONTROL UNIT FOR A MOTOR VEHICLE TRANSMISSION

COMMANDE DESTINEE A UNE TRANSMISSION D'UN VEHICULE AUTOMOBILE

(84) Benannte Vertragsstaaten:
**DE FR GB**

(30) Priorität: **20.06.1995 DE 19522348**

(43) Veröffentlichungstag der Anmeldung:
**08.04.1998 Patentblatt 1998/15**

(73) Patentinhaber: **SIEMENS AKTIENGESELLSCHAFT**
**80333 München (DE)**

(72) Erfinder:
• **GRAF, Friedrich**
**D-93059 Regensburg (DE)**
• **LOHRENZ, Frank**
**D-93049 Regensburg (DE)**

(56) Entgegenhaltungen:
EP-A- 0 406 615   EP-A- 0 576 703
EP-A- 0 622 570   EP-A- 0 626 527
EP-A- 0 638 742   WO-A-93/23689
WO-A-95/20114

• Maier, U., Petersmann, J., Seidel, W., Stohwasser, A., Wehr, T.: "Porsche Tiptronic"; ATZ Automobiltechnische Zeitschrift, Jahrgang 92; 1990; Heft 6; Seiten 308-319

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Steuerung für ein Kraftfahrzeuggetriebe.

Bei bekannten Getriebesteuerungen für Kraftfahrzeuge wird die Übersetzung des Getriebes in Abhängigkeit von der Fahrpedalstellung und von der Fahrgeschwindigkeit anhand von abgespeicherten Kennfeldern automatisch eingestellt. Dabei werden verschiedene Fahrparameter und Betriebszustände des Kraftfahrzeugs berücksichtigt (EP-A 0576703, EP-A 0622570, EP-A 0626527, EP-A 0638742). Die Auswahl des jeweils zu schaltenden Ganges oder - bei stufenlosen Getrieben - der einzustellenden Übersetzung erfolgt durch Steuerschaltungen, die nach den Methoden der Fuzzy-Logik arbeiten. Mit dieser Logik wird Expertenwissen, das durch Erfahrung gewonnen worden ist, in Form einer sogenannten Regelbasis beschrieben und damit für die Regel- oder Steuervorgänge des Kraftfahrzeug-Getriebes verwendet. Es werden Steuersignale erezugt, zum Beispiel ein Last- und ein Fahrererkennungssignal, die eine Kennfeldumschaltung bewirken, sowie Schaltungs-Sperrsignale, die Schaltungen verhindern, die von Schalkennfeldern veranlaßt werden, die aber zu dynamisch ungünstigen Fahrzuständen (z.B. zu einer Schleudergefahr) führen könnten.

Aus der EP 0 638 742 A1 ist eine Steuerung für ein automatisches Getriebe bekannt, bei der außerdem durch eine Fuzzy-Logikschaltung bei Erkennen von vorgegebenen dynamischen Fahrzuständen Steuersignale erzeugt werden, die Übersetzungsänderungen im Getriebe verhindern.

Darüber hinaus sieht die druckschriftlich nicht vorveröffentlichte EP 0 739 465 A (siehe auch WO 95/20114 A ; Stand der Technik nach Artikel 54(3) und (4) EPü) auch vor bei besonderen dynamischen Fahrzuständen eine Hoch- oder Rückschaltung - oder eine entsprechende Verstellung der Übersetzung - durchzuführen, die von dem gerade aktiven Schalt- oder Stellkennfeld nicht veranlaßt würde. Beispiele solcher dynamischer Fahrzustände sind das Auftreten von unzulässigem Radbremsschlupf oder das Befahren von längeren Gefällstrecken.

Der Erfindung liegt die Aufgabe zugrunde, eine Steuerung für ein Kraftfahrzeug-Getriebe zu schaffen, die auch derartige dynamische Fahrzustände berücksichtigt.

Diese Aufgabe wird erfindungsgemäß durch eine Steuerung nach Anspruch 1 gelöst. Vorteilhafte Weiterbildungen der Erfindung sind in den Unteransprüchen niedergelegt.

Die Vorteile der Erfindung liegen insbesondere in dem geringen Zusatzaufwand den sie erfordert. Es können alle Schaltungsbestandteile und Sensorsignale verwendet werden, die bei den aus den o.g. Patentanmeldungen bekannten Steuerungen bereits vorhanden sind. Darüber hinaus sind keine zusätzlichen Sensoren erforderlich, es müssen im wesentlichen noch etwas zusätzlicher Speicherinhalt und einige wenige witere Fuzzy-Regeln eingesetzt werden.

Ausführungsbeispiele der Erfindung werden im folgenden anhand der Zeichnung erläutert. Es zeigen:

Figur 1    die wesentlichen Bestandteile eines Kraftfahrzeugs mit einer erfindungsgemäßen Steuerung, in schematischer Darstellung,

Figur 2    die Getriebesteuerung des Kraftfahrzeugs nach Figur 1 als Blockdiagramm,

Figur 3    Zugehörigkeitsfunktionen des Ausgangssignals einer Fuzzy-Logikschaltung der Getriebesteuerung nach Figur 2,

Figur 4    in der Fuzzy-Logikschaltung der Getriebesteuerung nach Fig. 2 auftretende Signale,

Figur 5    eine um eine Zeitsteuerung erweiterte Getriebesteuerung des Kraftfahrzeugs nach Figur 1, und

Figur 6    eine in der Getriebesteuerung nach Fig. 5 verwendete Tabelle.

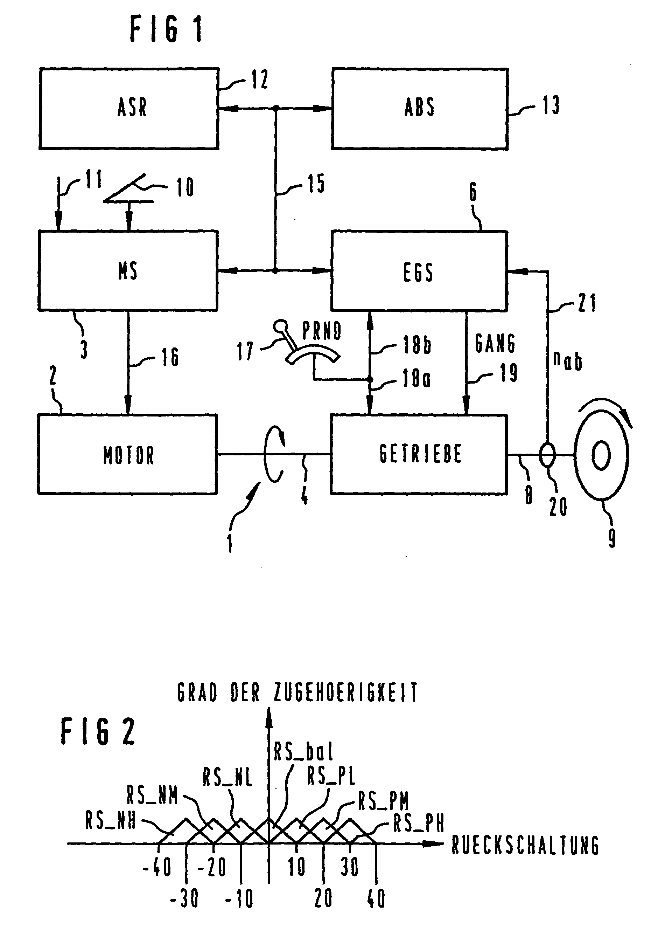

Ein schematisch dargestelltes Kraftfahrzeug 1 (Figur 1) weist einen Motor 2 auf, der von einer Motorsteuerung 3 gesteuert wird. Eine Motorabtriebswelle 4 ist über einen - hier nicht getrennt dargestellten - Drehmomentwandler mit einem automatischen Getriebe 5 verbunden, das von einer erfindungsgemäßen elektronischen Getriebesteuerung 6 gesteuert wird. Im nachfolgenden Ausführungsbeispiel ist das Getriebe 5 als Stufengetriebe ausgeführt, eine erfindungsgemäße Steuerung 6 läßt sich aber genauso gut für ein stufenloses Getriebe - oder zum Steuern der weiteren eingangs genannten Einrichtungen in einem Kraftfahrzeug - verwenden. Eine Getriebeabtriebswelle 8 ist mit der angetriebenen Achse des Kraftfahrzeugs verbunden, die hier durch ein angetriebenes Rad 9 symbolisiert wird.

Über ein Fahrpedal 10 gibt der Fahrer des Kraftfahrzeugs seine Befehle - genaugenommen sind es seine Wünsche - an die Motorsteuerung 3. Bei Betätigung des - hier nicht dargestellten - Bremspedals des Kraftfahrzeugs gelangt ein, z.B. von dem Bremslichtschalter erzeugtes, Bremssignal über eine Leitung 11 zu der Motorsteuerung 3. Das Kraftfahrzeug ist außerdem mit einer Radschlupf- oder Antischlupfregelung (ASR) 12 und einem Antiblockiersystem (ABS) 13 versehen, die durch Signalleitungen 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden (letztere nur, wenn eine entsprechende Steuereinrichtung vorhanden ist).

Über einen Wählhebel 17 bestimmt der Fahrer in üblicher Weise den Fahrbereich des automatischen Getriebes 5. Die Wählhebelsignale gelangen über eine mechanische Verbindung 18a zu dem Getriebe 5 und über eine elektrische Signalleitung 18b zu der Steuerung 6. Die Steuerung 6 sendet über eine Signalleitung 19 Steuersignale an das Getriebe 5, die den jeweiligen Getriebegang festlegen und die erforderlichen Schaltvorgänge steuern, oder - bei einem stufenlosen Getriebe - die jeweilige Übersetzung einstellen. Die Drehzahl der Getriebeabtriebswelle 8 wird von einem Drehzahlsensor 20 über eine Signalleitung 21 an die Steuerung 6 gemeldet. Zumindest die Signalleitungen 15, die die Steuergeräte 3, 6, 12 und 13 miteinander verbinden, können aus einzelnen Signalleitungen oder aus einem bidirektionalen Bus, z.B. aus einem bekannten CAN- oder LAN-Bus, bestehen. Die Steuergeräte und -systeme 3, 12 und 13 müssen nicht vorhanden sein. Falls sie es aber sind, ist es von Vorteil, wenn die Getriebesteuerung 6 auf die von ihnen gelieferten Sensorsignale (z.B. für die Raddrehzahlen) und davon abgeleitete Größen zugreifen kann.

In einer noch zu beschreibenden Fuzzy-Logikschaltung werden Zugehörikeitsfunktionen verarbeitet, wie sie aus Figur 2 ersichtlich sind. Dargestellt ist die Zugehörigkeitsfunktion einer Ausgangsgröße der Fuzzy-Logikschaltung 23, nämlich der Grad der Zugehörigkeit der Notwendigkeit einer Rückschaltung RS zu folgenden Fuzzy-Wertigkeiten: NH = negative high (also: sehr negativ), NM = negative medium, NL = negative low, PL = positive low, PM = positive medium, PH = positive high. Diese Zugehörikeitsgrade RS_NH usw. sind die Ergebnisse der in der Fuzzy-Logikschaltung abgearbeiteten Fuzzy-Regeln, sie stellen die Relevanz der Regeln dar. Das zusammengefaßte Ergebnis mehrerer dieser Regeln bezüglich einer Ausgangsgröße ergibt sich zum Beispiel aus einer nach der Flächenschwerpunktsmethode durchgeführten Defuzzifizierung. Positive Abszissenwerte beduten, daß eine Rückschaltung eingeleitet wird, negative Werte, daß sie verboten wird. Die Wertigkeit RS_bal entspricht der sog. Balance-Regel, die dann wirksam wird, wenn keine der anderen Regeln aktiv ist, und zwar um undefinierte Zustände zu verhindern.

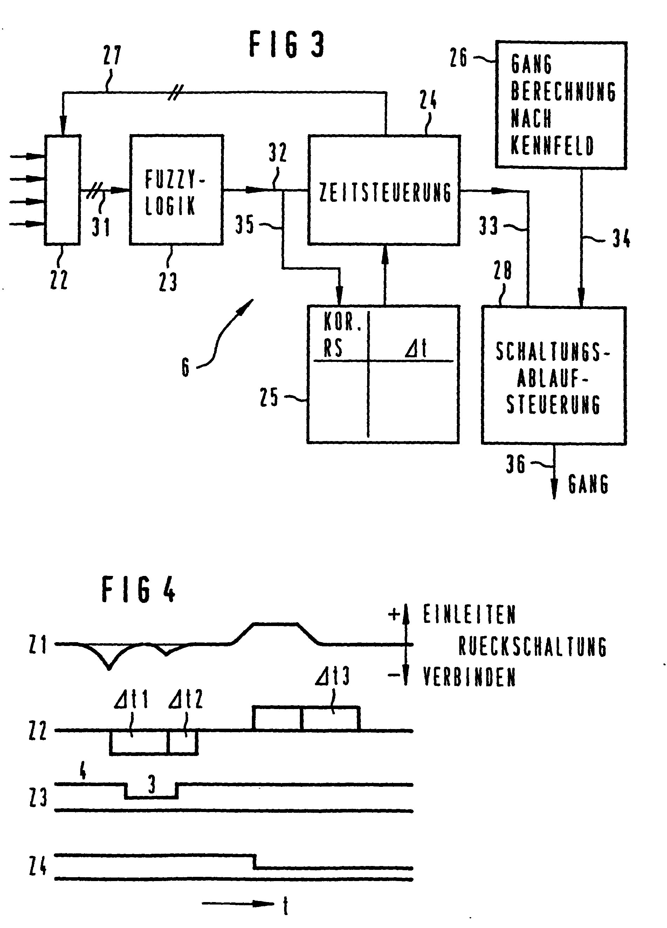

Die Getriebesteuerungteuerung 6 (Figur 3) weist folgende Bestandteile auf: eine Signalaufbereitungsschaltung (im folgenden abgekürzt: Signalaufbereitung) 22, eine Fuzzy-Logikschaltung (im folgenden auch als Fuzzy-Logik bezeichnet) 23, eine Zeitsteuerung 24, eine Tabelle 25, eine Gangberechnungschaltung 26 und eine Schaltungsablaufsteuerung 28. Diese Bestandteile sind in den o.g. Patentanmeldungen bereits in Einzelheiten beschrieben, sie werden hier nur in ihrer Wirkunsweise erläutert. Die Zeitsteuerung 24 ist über eine Rückkopplungsleitung 27 mit der Signalaufbereitungsschaltung 22 verbunden. Die Gangberechnungschaltung 26 wählt den jeweils einzurückenden Gang oder die zu wählende Übersetzung in bekannter Weise anhand von Schalt- oder Stellkennfeldern. In der Tabelle 25 werden den verschiedenen Werten der Rückschaltnotwendikeit RS, d.h. den Fuzzy-Schlußfolgerungen oder -Konklusionen, zum Beispiel folgende Zeitwerte zugewiesen.

| korrig. RS | Zeitwert $\Delta t$ |
|------------|---------------------|
| RS_PL | $\infty$ |
| RS-NH | 3 s |
| RS-NL | 0 |

Die in der Patentanmeldung EP 0 622 570 A beschriebene dynamische Schaltkorrektur einer automatischen Getriebesteuerung mit einem Fuzzy-System wird durch die vorliegende Steuerung wie folgt verbessert und ergänzt.

Das Signal "schaltung" (jeweils für Hoch- und Rückschaltung) greift nicht nur ein, um Schaltungen, die von Schalt- oder Stellkennfeldern initiiert werden, zu verhindern, sondern es veranlaßt auch von den Kennfeldern unabhängige Schaltungen. Dies kann bei bestimmten dynamischen Fahrzuständen sinnvoll sein, in denen eine Hoch- oder Rückschaltung vom aktiven Schaltkennfeld nicht ausgelöst wird. Beispiele sind ein Auftreten von Bremsschlupf, bei dem eine Hochschaltung eingeleitet wird, oder eine (steile) Bergabfahrt, bei der die Bremswirkung durch eine Rückschaltung verbessert, d.h. eine Bremsunterstützung für den Fahrer gegeben wird.

Dies wird dadurch realisiert, daß Signale "hochschaltung" oder "rückschaltung" vorzeichenbehaftet berechnet werden. Zum Beispiel werden Schaltverbote negativ bewertet und Schaltempfehlungen durch ein positives Vorzeichen gekennzeichnet (oder umgekehrt). Des weiteren kann in den Betrag des jeweiligen Signals auch eine Information über die Priorität dieses Eingriffs eingefügt werden.

Die Fuzzy-Logikschaltung 23 entspricht weitgehend der in der Patentanmeldung EP-A 0638742 beschriebenen Fuzzy-Logik-Steuerschaltung. Zu der Regelbasis RB_Schaltung sind allerdings die vorstehend erläuterten Ergänzungen hinzugefügt. Dies bedeutet, daß die Regeln gemäß ihrer Priorität unterschiedliche Schlußfolgerungen besitzen, was sich in einer Zuweisung unterschiedlicher Zugehörigkeitsfunktionen niederschlägt. So gelten für die Rückschaltung folgende Regeln (RULES):

    a-RULE RS-Kurven-Verbot:
        if ( ay is very_big)
            then rückschaltung=RS_NH
    Diese Regel unterbindet Rückschaltungen bei großer Querbeschleunigung. Sie dient der Erhaltung der Fahrstabilität und ist deshalb hoch priorisiert. (RS_NH bedeutet: Zuweisung eines betragsmäßig großen negativen Wertes).

```
b-RULE Bremsunterstützung
        if
                ax_br is NH
                and t_br is large
                and (mdiff is neg)
                and (nmot is less_high)
        then rückschaltung is RS_PL


c-RULE RS_Sperren
        if (sx is neg)
        then rückschaltung=RS_NH


d-RULE RS_aufheben
        if (delta_dk is pos)
        then rückschaltung=RS_NL
```

**Regel b** bewirkt, daß bei einem Bremsvorgang bestimmter Intensität ax_br und Dauer t_br eine Rückschaltung eingeleitet wird. Die Größen ax_br und t_br werden dabei dem Fuzzy-System zur Verfügung gestellt. Sie sind folgendermaßen definiert:

kein Bremsvorgang:      ax_br=0

Bremsung:      $ax\_br = \dfrac{v_0 - v_t}{t\_br}$

Darin sind:

$v_0$      die Fahrzeuggeschwindigkeit in m/s zu Beginn des Bremsvorgangs
$v_t$      die aktuelle Fahrzeuggeschwindigkeit [m/s]
t_br      die gesamte Bremszeit [s] des aktuellen Bremsvorgangs

Sowohl die mittlere Bremsverzögerung ax_br als auch die dazu laufende Bremszeit t_br charakterisieren den aktuellen Bremsvorgang. Weiter können vorausgegangene Bremsvorgänge durch die Bremshäufigkeit br_m, bezogen auf einen vorgegebenen Zeitraum, herangezogen werden (zur Berechnung siehe die Patentanmeldung EP-A 0626527). Die Prämisse "nmot is less_high" verhindert, daß bei starkem Gefälle der Motor überdreht wird.

Die Schlußfolgerung der Regel b lautet "RS_PL", was einer Empfehlung zu einer Rückschaltung mit niedriger Priorität entspricht.

Regel d soll Regel b aufheben, wenn der Fahrer wieder zu beschleunigen wünscht, was sich in einem Niedertreten des Fahrpedals (= Öffnen der Drosselklappe) zeigt.

Das Inferenzsystem der Fuzzy-Logikschaltung 23 verarbeitet die Regeln, die die Ausgangsgröße "rückschaltung" beeinflussen derart, daß die Regelrelevanz die Größe der zugeordneten Fläche skaliert. Zur Defuzzifizierung wird die Flächenschwerpunktmethode verwendet. Es ist aber auch möglich, andere bekannte Methoden der Inferenz und Defuzzifizierung einzusetzen. Entscheidend ist, daß durch Zuweisung einer geeigneten Konklusion (Fläche) und Verarbeitungsmethode nun Regel b durch Regel a, Regel c oder Regel d neutralisiert wird und darüber hinaus sich Regel a, Regel c oder Regel d so durchsetzen, daß das Fuzzy-System einen negativen Wert ausgibt, wodurch eine Rückschaltung rückgängig gemacht oder verhindert wird. Dies ist im angegebenen Beispiel wichtig, da die Bremsunterstützung durch Rückschalten nicht stattfindet oder beendet wird, wenn Bremsschlupf an den angetriebenen Rädern vorliegt, oder das Fahrzeug im Grenzbereich eine Kurve durchfährt. Würde nämlich dabei eine Rückschaltung doch durchgeführt, so könnte sie das Fahrzeug zum Schleudern bringen.

Eine quantitativ unterschiedliche und differenzierte Entscheidung (Signal "rückschaltung") über den Eingriff der dynamischen Schaltkorrektur ist nur eine weitere konsequente Nutzung des Potentials der Fuzzy-Methodik. Es lassen sich auch so durch die "scharfe" Fuzzy-Ausgangsgröße die zugrundeliegende Regel oder die Eingriffsursache über die Höhe der "scharfen" numerischen Ausgangsgröße des Fuzzy-Systems erfassen.

Damit läßt sich ein variabler Verbotszeitraum realisieren, der auch bei kürzerem Auftreten von Eingriffen der dynamischen Korrektur diese über einen unterschiedlich langen Zeitraum aufrecht erhält. Aus Figur 4 sind verschiedene in der Steuerung 6 auftretende und erzeugte Signale ersichtlich: In einer Zeile Z1 ist ein Signal Korrektur "rückschaltung" dargestellt. Dieses Signal wird auf einer Leitung 32 (siehe Figur 3) übertragen. In einer Zeile Z2 ist ein zeitlich überlagertes Korrektursignal dargestellt, das auf einer Leitung 33 übertragen wird. In einer Zeile Z3 ist ein Signal Gangauswahl gemäß Schaltkennfeld dargestellt, das auf einer Leitung 34 übertragen wird; und in einer Zeile Z4 ein ist ein den zu aktivierenden Getriebegang bestimmendes Signal dargestellt, das auf einer Leitung 33 an das Getriebe übermittelt wird. Die auf eine Leitung 31 übertragenen Eingangssignale der Fuzzy-Logikschaltung 23 sind hier nicht dargestellt, sie sind in der genannten Patentanmeldung beschrieben.

Das Signal in Zeile Z1 enthält dabei eine Information über die Art des dynamischen Korrektureingriffs - hier einer aktiven Einleitung einer Rückschaltung, und zwar unabhängig von einer Berechnung nach einem Schaltkennfeld -, oder aber eine Information über die Art der Verhinderung von Rückschaltbefehlen aus dem gerade aktiven Schaltkennfeld.

Die Zeitsteuerung 24 ergänzt die Wirksamkeit eines derartigen Eingriffs beim Abklingen der Wirksamkeit einer Regel. Diese trifft gemäß der Art eines Eingriffs x nach einem Signal auf der Leitung 32 eine Auswahl und fügt einen Zeitraum $\Delta tx$ an, um den die Wirksamkeit des originär von der Fuzzy-Logikschaltung 23 vorgegebenen Eingriffs verlängert wird (durch ein Signal auf der Leitung 27). Die Werte für $\Delta t$ sind in der Tabelle 25 gespeichert. Dies führt zur Unterdrückung einer Rückschaltung, wie sie aus einer Gangberechnung nach dem Schaltkennfeld 26 über die Leitung 34 ausgegeben wird; d.h. über die Leitung 33 wird nun kein Rückschaltbefehl an das Getriebe weitergegeben. Erfolgt dagegen eine Vorgabe einer Rückschaltung von der Fuzzy-Logikschaltung 23, so wird diese unabhängig von der Steuerung 26 auf der Leitung 33 ausgegeben.

Mit der Tabelle 25 ist es aber auch möglich, einen aktuell ablaufenden (verlängerten) Eingriff $\Delta tx$ abzubrechen, etwa um die Fahrstabilität des Kraftfahrzeugs zu erhalten.

Konventionelle Fuzzy-Systeme enthalten keinerlei Zeitspeicher, was zur Folge hat, daß Schlußfolgerungen, oder allgemein Ausgangssignale, eines Fuzzy-Systems nur durch dieses (d.h. seine Regeln und Zugehörigkeitsfunktionen) und durch die zum gleichen Zeitpunkt anliegenden Eingangssignale definiert sind. Oft ist es notwendig oder zweckmäßig, die Schlußfolgerungen und damit Ausgangssignale des Fuzzy-Systems sowohl von der "Vorgeschichte" der Eingangssignale, als auch von der Schlußfolgerung im vorangegangenen Zeitraum abhängig zu definieren. Im Stand der Technik erfolgt dies üblicherweise durch eine Filterung und Mittelwertbildung, oder allgemein Signalaufbereitung, der Eingangssignale in der Signalaufbereitungsschaltung 22.

Bei der vorliegenden Erfindung erfolgt dies so daß die Zeitsteuerung 24 abhängig von der Tabelle 25 für den vorgegebenen Zeitraum $\Delta tx$ ersatzweise eine oder mehrere Eingangsgrößen vorgibt. Dies kann in obiger Regel b geschehen, indem selbst nach Ende des Bremsvorgangs das Signal ax-br auf einen Wert gesetzt wird, infolge dessen die Regel bei Erfüllung der anderen Prämissen relevant ist, entweder nur für die Zeitspanne $\Delta tx$, oder solange bis eine andere Prämisse der Regel nicht mehr erfüllt ist.

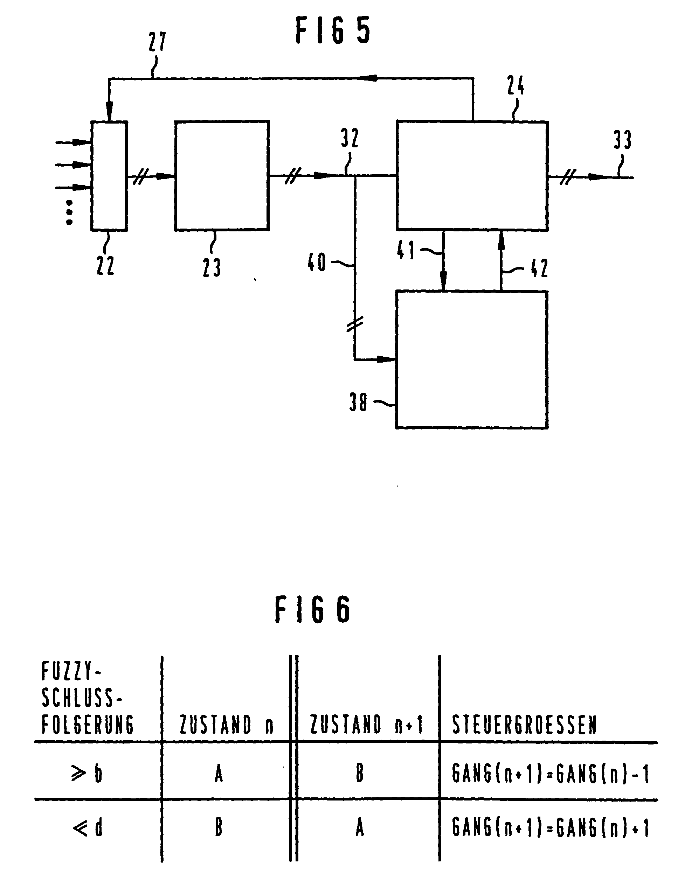

Aus Figur 5 ist eine Erweiterung der Getriebe-Steuerung 6 zu einem sequentiellen Automaten mit unscharfen Übergangsbedingungen ersichtlich. Die Fuzzy-Konklusionen, d.h. die auf der Leitung 32 auftretenden Ausgangssignale der Fuzzy-Logikschaltung 23, dienen als Eingangswert(e) für eine Tabelle 38. Sie definieren mit dem aktuellen Zustand n einen Zustand n+1 und die zugehörigen Prozeßsteuergrößen (hier den einzulegenden Gang). Der Inhalt der Tabelle 38 ist in Figur 6 dargestellt. Diese Prozeßsteuergrößen können nach einer eigenen Vorschrift festgelegt sein oder bestimmten Konklusionen des Fuzzy-Systems entsprechen. Die Tabelle 38 ist mit der Fuzzy-Logikschaltung 23 und der Zeitsteuerung 24 über Signalleitungen 40, 41 und 42 verbunden.

Wichtig ist auch die vorzeichenbehaftete Erfassung des Schlupf sx der angetriebenen Räder, die für Regel c erforderlich ist. Mit ihr können sowohl Schlupfzustände bei unangepaßter Motorleistung und glatter Fahrbahn festgestellt werden (Vorzeichen ist positiv), als auch ein Auftreten von Bremsschlupf, bei dem der Kraftschluß zur Fahrbahn beim Bremsen (mit der Betriebbremse oder mit dem Motor im Bremsbetrieb) verloren geht (Vorzeichen ist negativ). Hierbei ist es notwendig, eine Hochschaltung durchzuführen, oder aber einen Rückschaltbefehl oder eine Rückschaltempfehlung, wie z.B. durch Regel b, aufzuheben.

Ist in dem Kraftfahrzeug eine manuelle Gangvorgabe vorgesehen (zum Beispiel über einen Taster am Lenkrad oder einen Wählhebel), so können deren Signale über die Signalaufbereitung 22 der Fuzzy-Logikschaltung 23 zugeführt werden. Die daraus einen Schaltungsbefehl ergebende Fuzzy-Regel lautet zum Beispiel:

```
RULE manuelle_RS
   if
      RS_switch is on
      and (nmot is less_high)
   then rückschaltung is RS_PL
```

Eine niedrige Priorisierung mit RS_PL bewirkt auch hier, daß diese Regel bei Fahrzuständen, in denen eine Rückschaltung der Fahrstabilität abträglich wäre, unwirksam ist. Sinngemäß läßt sich für das manuelle Einleiten einer Hochschaltung eine entsprechende Regel formulieren.

Für ein stufenloses Getriebe (siehe unsere ältere Anmeldung EP 0 739 465 A, siehe auch WO 95/20 114 A) ist die vorstehend erläuterte Steuerungsstruktur ebenfalls nützlich. Dies bedeutet, daß durch die Fuzzy-Logikschaltung 23 wie mit der Regel b festgelegt eine vorhandene Übersetzung festgehalten oder der Bereich noch möglicher Übersetzungsverstellungen eingeengt wird.

Es ist auch möglich, eine Übersetzung korrigierend als Vorwegnahme der Vorgabe aus Block 24 obiger Patentanmeldung durchzuführen. Damit läßt sich ebenfalls die Bremswirkung des Motors gezielt bei Bergabfahrt einsetzen, und zwar durch Vorgabe der Übersetzung. Eine Unterscheidung zwischen einem verhinderndem Eingriff und einer aktiven Vorgabe erfolgt über das Vorzeichen, die Priorisierung wie vorstehend erläutert. Dabei ist die Zeitsteuerung 24 notwendig, um Entscheidungen des Fuzzy-Logikschaltung 23, sowohl zum Einstellen einer vorgegebenen Übersetzung als auch zum Korrigieren von Vorgaben aus Block 24 als temporäre Ergänzung (variabler Verbots- bzw.

Eingriffszeitraum) zu realisieren, die auch bei kürzerem Auftreten von Eingriffen der dynamischen Korrektur diese über einen unterschiedlich langen Zeitraum aufrecht erhält, und zwar auch dann, wenn die Eintrittsbedingungen nicht mehr zutreffen.

Diese Verteilung wird erzielt, wenn über die Leitung 27 eine Bedingung, d.h. ein Eingangssignal für das Fuzzy-Logikschaltung 23, für eine in der Tabelle 38 definierte Zeit, so verändert wird, daß die Schlußfolgerung während dieser Zeit aufrechterhalten wird.

Ein manueller Eingriff ist ebenfalls über eine Tastereingabe zu realisieren, allerdings erfolgt dann die Verstellung der Übersetzung über die Änderung der Übersetzung oder der Motordrehzahl nach oben (Rückstellung) oder unten (Hochstellung), wobei die Änderungen auch relativ zu den Werten vor dem manuellen Eingriff durchgeführt werden können.

## Patentansprüche

1. Steuerung (6) für ein Kraftfahrzeug-Getriebe (5), die eine Getriebeübersetzung in Abhängigkeit zumindest von der Fahrpedalstellung und der Fahrzeuggeschwindigkeit anhand von abgespeicherten Kennfeldern ermittelt , und die eine Fuzzy-Logikschaltung (23) mit einer Regelbasis aufweist, die verschiedene, Fahrzustände und den Lastzustand des Kraftfahrzeugs charakterisierende Eingangssignale auswertet und die bei vorgegebenen dynamischen Fahrzuständen Steuersignale erzeugt, durch die die Steuerung (6) anstatt der ermittelten Getriebeübersetzung eine davon unabhängige Getriebeübersetzung festlegt und diese automatisch steuert, wobei

   - die Fuzzy-Logikschaltung (23) bei Erkennen von weiteren vorgegebenen dynamischen Fahrzuständen zusätzliche Steuersignale zum Veranlassen einer von dem jeweiligen Kennfeld unabhängigen Änderung der Getriebeübersetzung erzeugt, und
   - eine Zeitsteuerung (24) die Steuersignale für eine vorgegebene Zeitspanne ($\Delta t, \Delta tx$) aufrecht erhält, in dem die Zeitsteuerung (14) eine oder mehrere Eingangssignale der Fuzzy-Logikschaltung (23) für die vorgegebene Zeitspanne ($\Delta t, \Delta tx$) vorgibt.

2. Steuerung nach Anspruch 1, **dadurch gekennzeichnet, daß** bei einer Erkennung eines Radschlupfes durch die Fuzzy-Logikschaltung (23) ein Steuersignal für eine Hochschaltung oder eine Verringerung der Getriebeübersetzung erzeugt wird.

3. Steuerung nach Anspruch 1, **dadurch gekennzeichnet, daß** bei einer Erkennung einer Bergabfahrt des Kraftfahrzeugs durch die Fuzzy-Logikschaltung (23) ein Steuersignal für eine Rückschaltung oder eine Erhöhung der Getriebeübersetzung erzeugt wird.

4. Steuerung nach Anspruch 1, **dadurch gekennzeichnet, daß** die Steuersignale auch eine Information über die Priorität der Verhinderung und/oder der Änderung enthalten.

5. Steuerung nach Anspruch 1, **dadurch gekennzeichnet, daß** durch die Fuzzy-Logikschaltung (23) Signale, mit denen eine manuelle Gangvorgabe oder Gangauswahl durch den Fahrer erfolgt, ausgewertet und Steuersignale erzeugt werden, die die Getriebeübersetzung einstellen.

## Claims

1. Controller (6) for a motor vehicle transmission (5), which determines a transmission ratio as a function of at least the position of the accelerator pedal and the velocity of the vehicle with reference to stored characteristic diagrams, and which has a fuzzy logic circuit (23) with a rule base which evaluates various input signals which characterize the locomotion states and the load state of the motor vehicle and which generates control signals when predefined dynamic locomotion states occur, by means of which the controller (6) defines, instead of the determined transmission ratio, a transmission ratio which is independent thereof and automatically controls it,

**EP 0 834 028 B1**

- the fuzzy logic circuit (23) generating control signals, when further predefined dynamic locomotion states are detected, in order to bring about a change in the transmission ratio independently of the respective characteristic diagram, and
- a timer (24) maintaining the control signals for a predefined time period ($\Delta t$, $\Delta tx$) in that the timer (24) predefines one or more input signals of the fuzzy logic circuit (23) for the predefined time period ($\Delta t$, $\Delta tx$).

2. Controller according to Claim 1, **characterized in that**, when a wheel slip is detected by the fuzzy logic circuit (23), a control signal is generated for shifting up or reducing the transmission ratio.

3. Controller according to Claim 1, **characterized in that** when the fuzzy logic circuit (23) detects that the motor vehicle is travelling downhill, a control signal is generated for shifting down or increasing the transmission ratio.

4. Controller according to Claim 1, **characterized in that** the control signals also contain information on the priority of the prevention and/or change.

5. Controller according to Claim 1, **characterized in that** the fuzzy logic circuit (23) evaluates signals with which a manual gear speed setting or gear speed selection is made by the driver and generates control signals which set the gear transmission ratio.

**Revendications**

1. Commande (6) pour transmission de véhicule automobile (5), qui détermine un rapport de transmission au moins en fonction de la position de la pédale d'accélérateur et de la vitesse du véhicule à l'aide de familles de courbes caractéristiques mémorisées et qui comporte un circuit à logique floue (23) ayant une base de règles, qui évalue différents signaux d'entrée caractérisant des états de conduite et l'état de charge du véhicule automobile et qui, pour des états de conduite dynamiques prédéterminés, produit des signaux de commande par lesquels la commande (6) fixe à la place du rapport de transmission déterminé un rapport de transmission indépendant de celui-ci et le commande automatiquement, dans laquelle

- le circuit à logique floue (23) produit, lors de la détection d'autres états de conduite dynamiques prédéterminés, d'autres signaux de commande pour provoquer une modification, indépendante de la famille de courbes caractéristiques respectives, du rapport de transmission, et
- une commande temporelle (24) maintient les signaux de commande pour un intervalle de temps prédéterminé ($\Delta t$, $\Delta tx$) pendant lequel la commande temporelle (24) prescrit un ou plusieurs signaux d'entrée du circuit à logique floue (23) pour l'intervalle de temps prédéterminé ($\Delta t$, $\Delta tx$).

2. Commande selon la revendication 1, **caractérisée par le fait que**, lors d'une détection d'un patinage de roue, un circuit à logique floue (23) produit un signal de commande pour un changement de vitesse vers le haut ou pour une diminution du rapport de transmission.

3. Commande selon la revendication 1, **caractérisé par le fait que**, lors d'une détection d'une descente du véhicule automobile, le circuit à logique floue (23) produit un signal de commande pour une rétrogradation ou pour une augmentation du rapport de transmission.

4. Commande suivant la revendication 1, **caractérisée en ce que** les signaux de commande contiennent aussi une information concernant la priorité du blocage et/ou des modifications.

5. Commande suivant la revendication 1, **caractérisée en ce que** le circuit (23) de logique floue exploite des signaux, par lesquels une prescription manuelle de rapport ou une sélection de vitesse est effectuée par le conducteur et il est produit des signaux de commande qui règlent le rapport de transmission.

FIG 1

FIG 2

# FIG 3

27

22

31

**FUZZY-LOGIK**
23

32

35

6

**ZEITSTEUERUNG**
24

| KOR. RS | $\Delta t$ |
|---------|------------|

25

26
**GANG BERECHNUNG NACH KENNFELD**

33

34

28

**SCHALTUNGS-ABLAUF-STEUERUNG**

36 → GANG

# FIG 4

Z1

+ EINLEITEN
RUECKSCHALTUNG
− VERBINDEN

$\Delta t3$

$\Delta t1$   $\Delta t2$

Z2

4

3

Z3

Z4

→ t

## FIG 5

## FIG 6

| FUZZY-SCHLUSS-FOLGERUNG | ZUSTAND n | ZUSTAND n+1 | STEUERGROESSEN |
|---|---|---|---|
| ≫ b | A | B | GANG(n+1)=GANG(n)-1 |
| ≪ d | B | A | GANG(n+1)=GANG(n)+1 |